# EUROPEAN PATENT APPLICATION

(11) **EP 4 303 123 A1**
(43) Date of publication of application: **10.01.2024**
(21) Application number: 23181114.2
(22) Date of filing: 23.06.2023
(51) Int. Cl.: B64C 9/02, B64C 3/50, B64C 9/22, B64C 9/16, B64C 9/08, B64C 13/28, B64C 9/18, B64C 9/24, B64C 3/18, B64C 3/28, F16H 19/04, B64C 9/14

(54) **WING FOR AN AIRCRAFT**

(30) Priority: 07.07.2022 DE 102022116950
(71) Applicant: Airbus Operations GmbH, 21129 Hamburg (DE)
(72) Inventor: BENSMANN, Stefan, 21129 Hamburg (DE)
(74) Representative: LKGLOBAL Lorenz & Kopf Patentanwalt Attorney at Law PartG mbB

(57) **Abstract**

A wing for an aircraft is proposed, comprising a leading edge as a first chordwise edge, a trailing edge as a second chordwise edge, an upper skin extending between the leading edge and the trailing edge, a lower skin extending between the leading edge and the trailing edge, at least one spar extending between the upper skin and the lower skin in a spanwise direction to create wing box with the upper skin and the lower skin, and at least one high lift control surface movably supported at at least one of the chordwise edges by a support device, wherein the support device is attached inside or reaches into the wing box at least partially.

## Description

### Technical field

The invention relates to a wing for an aircraft and an aircraft having such a wing

### Background of the invention

Commercial or transport aircraft having fixed wings are usually equipped with high lift systems that comprise deployable high lift devices for selectively increasing the wing surface and the camber for start and landing procedures. These high lift devices often comprise leading-edge and trailing-edge devices. For example, a slat is arranged at a leading edge of the wing and is movable from a retracted position, in which the slat is flush with a fixed wing part, into a forward and/or downward direction through an actuation mechanism. In extended positions, the slat often creates a gap between itself and the fixed wing part.

The actuation mechanism is mainly located inside the fixed wing part and may comprise two support tracks or linkages per slat that are spaced apart in a spanwise direction and coupled with the slat through lugs, knuckles, joints, or other coupling devices. The support devices for the slat are commonly arranged forward of a front spar, which is usually fluid-tight as it acts as a forward delimitation for a fuel tank arranged inside a so-called wing box. In a comparable manner, the wing box has a rear spar, behind which an actuation mechanism for trailing-edge control surfaces may be provided. Thus, the front spar and rear spar are usually designed in a fluid-tight manner and represent installation boundaries for high lift control systems.

For example, WO 2018197649 A1 shows a wing for an aircraft comprising a wing and a slat track having a profile with an upper flange portion, a lower flange portion and at least one web portion connecting upper and lower flange portions. A connection assembly for connecting the slat to the main wing is formed such that it is arranged entirely in front of the front spar of the associated wing and does not penetrate the front spar.

### Summary of the invention

In future aircraft, other concepts for storing fuel or other energy carriers may be considered. Thus, it is an object of the invention to propose an alternative wing design that is improved regarding the support of high lift control surfaces.

This object is met by a wing having the features of independent claim 1. Advantageous embodiments and further improvements may be gathered from the subclaims and the following description.

A wing for an aircraft is proposed, comprising a leading edge as a first chordwise edge, a trailing edge as a second chordwise edge, an upper skin extending between the leading edge and the trailing edge, a lower skin extending between the leading edge and the trailing edge, at least one spar extending between the upper skin and the lower skin in a spanwise direction to create a wing box with the upper skin and the lower skin, and at least one high lift control surface movably supported at at least one of the chordwise edges by a support device, wherein the support device is attached inside or reaches into the wing box at least partially.

The leading edge is a forwardmost part of the wing, which faces into the flight direction, i.e. into the airflow. It is usually not far from a stagnation line that separates an upper and a lower part of the wing and that may be found close to the region where the wing has its maximum curvature. The trailing edge represents a rearmost edge. The upper skin and the lower skin are curved to provide the desired aerodynamic characteristics, which may depend on the desired velocity and altitude range of the aircraft, to which the wing is attached.

At the leading edge, and/or at the trailing edge, one or more high lift control surfaces may be provided. For example, a leading edge control surface may be created as a movable nose section in the form of a slat, a droop nose, or a similar device. By extending the leading-edge control surface from a fixed wing part, the camber of the leading-edge region is increased. In some embodiments, also a gap between the leading-edge control surface and the fixed wing part is created. Each leading-edge control surface may be connected to a pair of actuation elements that are driven to move relative to the fixed wing part, wherein guides support the actuation elements.

In analogy, trailing edge control surfaces may be created by providing separate control surfaces that are extendable from the main wing part or by designing a trailing edge section of the wing to be movable relative to the fixed wing part.

For providing a sufficient structural stability, the wing, i.e. the main or fixed wing part, comprises at least one spar that extends along the spanwise direction. This may include a front spar and/or a rear spar. It is advantageous to use at least one front spar and at least one rear spar to create a box-like structure with the upper skin and the lower skin, which box-like structure is referred to as wing box.

Future aircraft may not require the wing box to be completely filled with kerosene, but instead use other smaller, separate tanks or other kinds of energy carriers, such as pressure tanks or cryogenic tanks for storing hydrogen, electrical energy storage devices or other. This allows to design the front and/or the rear spar differently. In particular, the respective spar does not need to be fluid-tight and does not represent a delimitation for an interior fuel tank.

The above-identified object is solved by having the support device being attached inside of or reach into the wing box at least partially. In this context, the support device is to be understood as a mechanical element that directly holds and guides the respective high lift surface. It may comprise a curved track and several guides, such as roller bearings, or glide bearings. In addition, the support device may include drive elements that lead to actively moving the respective high lift surface, such as a motor or an actuator.

In other words, the wing according to the invention allows to place a support device also into a region, which is commonly used for storing kerosene, wherein a dedicated sealing or an elaborate design of sealed pockets in the respective spar or a tank delimited by the respective spar is not required. Since the fluid-tightness is not necessary and since the position of the respective spar is not a dimensioning factor of a fuel tank, the respective spar may even be placed more forward or more rearward in comparison with common wing designs, upon desire and depending mainly on the structural stability of the wing. The mechanical design of a wing or a wing box may thus be driven mainly by the aerodynamics and the structural stability.

Since the respective spar is only used for providing the mechanical stability, at least a part of a support device may be directly attached to the respective spar, either to a side facing to the respective chordwise edge or away from the respective chordwise edge, to which the respective control surface is attached, or inside a recess of the respective spar.

In an advantageous embodiment, the at least one spar comprises a front spar and a rear spar. Preferably, the front spar and the rear spar are arranged to follow constant chordwise points along the spanwise dimension. In other words, they may both be placed at a certain relative position of local chords throughout a major spanwise part of the wing. It is not ruled out that the wing according to the invention also has a main spar that is arranged between the front spar and the rear spar.

In an advantageous embodiment, the at least one spar comprises a framework structure. Thus, the respective spar does not comprise a closed surface, but is created by a planar structure consisting of a plurality of interconnected elongate or flat elements. This reduces the weight of the respective spar. Since a framework has a plurality of openings, the design of the respective spar and the respective support device can be harmonized to allow an interaction of elements arranged at both sides of a frame by passing through the openings of the framework structure.

In an advantageous embodiment, at least a part of the support device is attached to a chordwise side of the respective spar that faces away from the respective chordwise edge of the wing, with which the respective at least one high lift control surface is associated. Consequently, a bearing, an actuation element or an actuator is provided directly inside the wing box and mechanically interacts with the respective high lift control surface on outside the wing box. This may improve the design of the support device, as clearly less constraints in size and geometry are to be considered compared to common solutions with the main parts of the support device being arranged outside the wing box.

In an advantageous embodiment, the at least one spar has openings extending in a chordwise direction, through which an actuation element of the support device extends. Thus, the actuation element may pass through the respective spar through the opening. A dedicated, sealed pocket directly following the opening is not required.

In an advantageous embodiment, the wing further comprises a plurality of parallel ribs between the upper skin and the lower skin, extending in a chordwise direction and arranged at a distance to each other, wherein at least a part of the support device is arranged between or adjacent to the ribs. Inside the wing box, additional installation space for parts of the support device is available and may be used through attaching or supporting the respective parts to lateral faces of the ribs or on an inner side of the respective spar. This allows an improved design of the support device due to a plurality of additional installation options.

In an advantageous embodiment, the support device comprises an actuation element coupled with the respective high-lift control surface, wherein guides support the actuation element, wherein at least one of the guides is arranged in the wing box or at the at least one spar. Preferably, the guides include two guides at a distance to each other for supporting a single actuation element. For example, the guides are provided in the form of at least two pairs of bearings. Placing one of the guides into the wing box thus allows an optimized geometry for supporting the actuation element.

In an advantageous embodiment, the actuation element is a curved track, wherein the guides comprise at least one of a rolling bearing and a glide guide. Preferably, the guides comprise two pairs of rolling bearings or glide bearings.

In an advantageous embodiment, a plurality of separate tanks are arranged in the wing box, wherein the tanks are consecutively distributed along the spanwise direction. The tanks may be pressureless tanks, pressure tanks, or cryogenic tanks. In an alternative embodiment or additional thereto, also electrical storage units inside the wing box are conceivable. Segregation of tanks may be provided through ribs. Preferably, the tanks are arranged at a distance to each other.

In an advantageous embodiment, the at least one high lift control surface comprises at least one leading-edge high-lift control surface and/or a trailing-edge high-lift control surface. In particular, the above-mentioned features are beneficial for the integration of leading-edge slats.

Furthermore, the invention further relates to an aircraft comprising at least one wing according to the above.

### Brief description of the figures

In the following, the attached drawings are used to illustrate exemplary embodiments in more detail. The illustrations are schematic and not to scale. Identical reference numerals refer to identical or similar elements. They show:
Fig. 1 schematically shows a part of an aircraft in a top view with a partial section.
Fig. 2 to 4 schematically show sectional views of a leading-edge region of a wing.
Fig. 5 schematically shows a front spar having a framework structure.

### Detailed description of exemplary embodiments

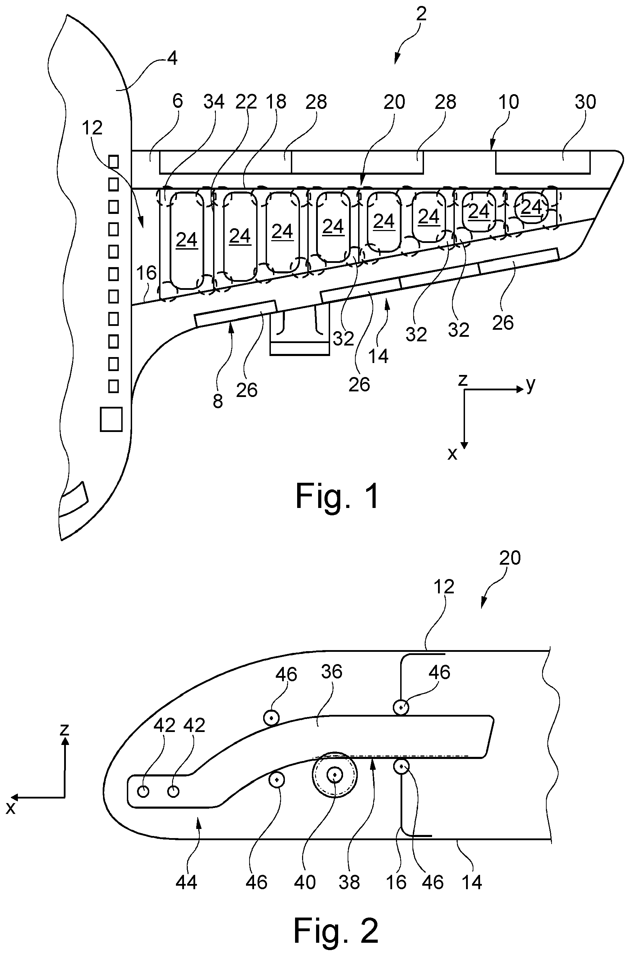

Fig. 1 shows a part of an aircraft 2 having a fuselage 4 and a wing 6. The wing 6 comprises a leading edge 8 as a first chordwise edge, the trailing edge 10 as a second chordwise edge, an upper skin 12 extending between the leading edge 8 and the trailing edge 10 and a lower skin 14, which is obstructed in this view and which also extends between the leading-edge 8 and the trailing edge 10. A front spar 16 runs along the leading-edge 8, extends substantially in spanwise direction and is preferably parallel to the z-axis, which is the vertical axis in an aircraft-fixed coordinate system. A rear spar 18 is provided, which extends substantially parallel to the trailing edge 10. It is to be understood, that the front spar 16 and the rear spar 18 are completely enclosed by the upper skin 12 and the lower skin 14. The upper skin 12, the lower skin 14, the front spar 16 and the rear spar 18 create a wing box 20.

On the inner surfaces of the upper skin 12 and the lower skin 14 a plurality of chordwise stiffening elements, such as stringers or the like, may be arranged. Together with a plurality of parallelly arranged ribs 22 that extend between the front spar 16 and the rear spar 18 in chordwise directions, the wing box 20 constitutes a rigid, load-carrying structure. Exemplary, several pressure tanks 24 are arranged inside the wing box 20 and are distanced to each other in the span wise direction. Different than in common commercial or transport aircraft neither the front spar 16 nor the rear spar 18 needs to be fluid-tight since the wing box 20 itself is not used as a fuel tank. It is to be understood, that instead of several pressure tanks 24, other separate tanks may be provided or even electrical storage devices or any other energy carrier storing devices.

The wing 6 furthermore comprises leading-edge high-lift devices 26, which are exemplarily realized in the form of slats. At the trailing edge 10, trailing-edge high-lift devices 28 in the form of slats are provided. In addition, an aileron 30 is shown. Due to the wing box 20 not acting as a fuel tank itself, in particular the front spar 16 allows to hold support devices for supporting the leading-edge high-lift devices 26. The construction of the wing 6 even provides additional installation space 32, which is indicated by a plurality of dashed circles, in a region directly behind the front spar 16 and between the individual pressure tanks 24. At the same time, the rear spar 18 provides additional installation space 34 at the forward side. An exemplary use of the additional installation space 32 is shown in the figures further below.

Fig. 2 shows a cross-sectional view of a part of the wing box 20 is shown. Here, the slat 26 is not shown for simplification purposes. In this illustration, an actuation element 36 in form of a curved track is shown. In the drawing plane, the track 36 has a toothed rack 38, that engages with a pinion gear 40, which is driven by an actuator not shown herein. The track 36 is coupled with the slat 26 exemplary through two bolts 42 arranged on a forward part 44 of the track 36. For guiding the track 36 on its predetermined motion path, exemplarily two sets of rolling bearings 46 are provided. While a forward pair of the rolling bearings 46 is arranged forward the front spar 16, a rear pair of rolling bearings 46 is arranged directly on the front spar 16. Since the front spar 16 does not need to be a fluid-tight component, it is usable for holding support devices, e.g. in form of the rolling bearings 46.

For the sake of completeness, the front spar 16 comprises a C-shaped cross-section, which is merely an example and shall not be understood as a limitation. The upper skin 12 as well as the lower skin 14 are attached to the front spar 16.

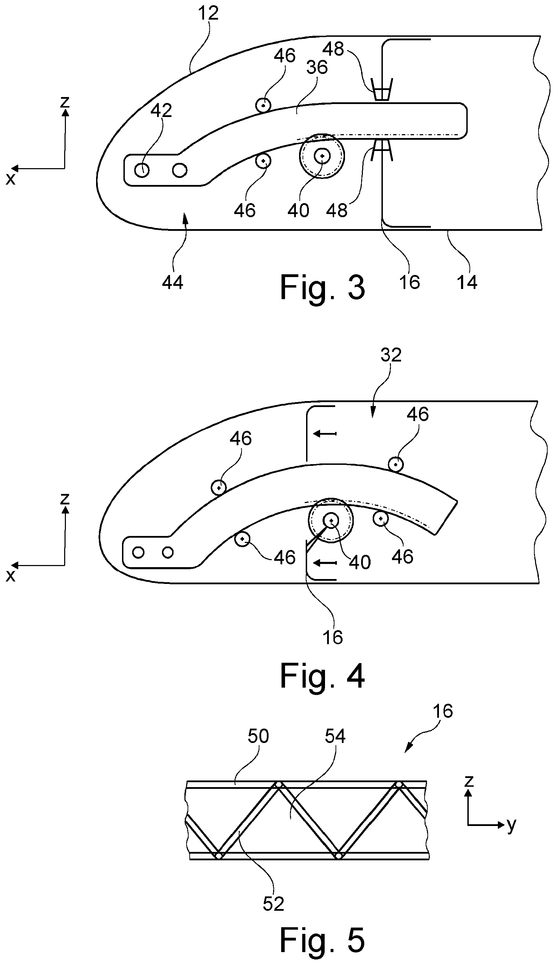

In fig. 3, instead of the rear pair of rolling bearings 46, glide bearings 48 are used. Similar to the illustration in fig. 2, they are attached to the front spar 16.

Fig. 4 shows an alternative design, in which the pinion gear 40 is supported by and arranged behind the front spar 16. The rear pair of rolling bearings 46 is arranged in a clear distance to the front spar 16 at a rearward location. The front spar 16 is arranged further forward, compared to the illustrations in figs. 2 and 3. Since the design and position of the front spar 16 does not directly influence the amount of fuel to be carried in the wing box 20, the position of the front spar 16 may be chosen to optimize the mechanical behavior of the wing box 20. In this example, the additional installation spaces 32 shown in fig. 1 are used to place pinion gear 40 and the rearward pair of rolling bearings 46.

Lastly, fig. 5 shows the front spar 16 in a front view. It is apparent that the front spar 16 exemplarily comprises a framework structure with longitudinal beams 50 and crossbeams 52, that are interconnected. Between the beams 50 and the crossbeams 52, a plurality of openings 54 are provided. These allow to pass through at least the actuation element 36.

### Reference numerals

- 2: aircraft
- 4: fuselage
- 6: wing
- 8: leading edge
- 10: trailing edge
- 12: upper skin
- 14: lower skin
- 16: front spar
- 18: rear spar
- 20: wing box
- 22: rib
- 24: pressure tank
- 26: leading-edge high-lift device / slat
- 28: trailing-edge high-lift device
- 30: aileron
- 32: installation space at front spar
- 34: installation space at rear spar
- 36: actuation element
- 38: toothed rack
- 40: pinion gear
- 42: bolt
- 44: forward part
- 46: rolling bearing
- 48: glide bearing
- 50: longitudinal beam
- 52: crossbeam
- 54: opening

## Claims

1. Wing (6) for an aircraft (2), comprising:
a leading edge (8) as a first chordwise edge,
a trailing edge (10) as a second chordwise edge,
an upper skin (12) extending between the leading edge (8) and the trailing edge (10),
a lower skin (14) extending between the leading edge (8) and the trailing edge (10),
at least one spar (16, 18) extending between the upper skin (12) and the lower skin (14) in a spanwise direction to create a wing box (20) with the upper skin (12) and the lower skin (14), and
at least one high lift control surface (26, 28) movably supported at at least one of the chordwise edges (8, 10) by a support device (46, 48),
wherein the support device (46, 48) is attached inside or reaches into the wing box (20) at least partially.

2. The wing (6) of claim 1,
wherein the at least one spar (16, 18) comprises a front spar (16) and a rear spar (18).

3. The wing (6) of claim 1 or 2,
wherein the at least one spar (16, 18) comprises a framework structure.

4. The wing (6) of any of the preceding claims,
wherein at least a part of the support device (46, 48) is arranged at a chordwise side of the respective spar (16, 18) that faces away from the respective chordwise edge (16, 18) of the wing (6), with which the respective at least one high lift control surface (26, 28) is associated.

5. The wing (6) of any of the preceding claims,
wherein the at least one spar (16, 18) has openings (54) extending in a chordwise direction, through which an actuation element (36) of the support device extends.

6. The wing (6) of any of the preceding claims,
further comprising a plurality of parallel ribs (22) between the upper skin (12) and the lower skin (14), extending in a chordwise direction, and arranged at a distance to each other, and
wherein at least a part of the support device is arranged between or adjacent to the ribs (22).

7. The wing (6) of claim 2,
wherein the support device comprises an actuation element (36) coupled with the respective high-lift control surface (26, 28), and
wherein guides (46, 48) support the actuation element (36), wherein at least one of the guides (46, 48) is arranged in the wing box (20) or at the at least one spar (16, 18).

8. The wing (6) of claim 7,
wherein the actuation element (36) is a curved track, and
wherein the guides (46, 48) comprise at least one of a rolling bearing (46) and a glide guide (48).

9. The wing (6) of any of the preceding claims,
wherein a plurality of separate tanks (24) are arranged in the wing box (20), and
wherein the tanks (24) are consecutively distributed along the spanwise direction.

10. The wing of any of the preceding claims,
wherein the at least one high lift control surface (26, 28) comprises at least one leading-edge high-lift control surface (26) and/or a trailing-edge high-lift control surface (28).

11. Aircraft (2) comprising at least one wing (6) according to any of the preceding claims.
